# EUROPEAN PATENT APPLICATION

(11) **EP 2 177 480 A1**
(43) Date of publication of application: **21.04.2010**
(21) Application number: 09171302.4
(22) Date of filing: 25.09.2009
(51) Int. Cl.: C02F 1/52, C02F 1/62

(54) **Aqueous coagulant composition and water treatment method**

(30) Priority: 17.10.2008 IN MU22342008
(71) Applicant: Unilever N.V., 3013 AL Rotterdam (NL); Unilever PLC, 100 Victoria Embankment London EC4Y 0DY (GB)
(72) Inventor: Dave Parthiv, Ripudaman, 400 099, Mumbai (IN); Mukherjee, Debasis, 400 099, India (IN)
(74) Representative: Rosen Jacobson, Frans Lucas M.

(57) **Abstract**

The invention relates to a water purification method and composition useful for removal of trace quantities of harmful heavy-metal contaminants like Arsenic, in addition to removal of micro-organisms like viruses, bacteria and cysts to make the water suitable for human consumption. It is an object of the present invention to provide a coagulant composition for purification of water that provides for removal of at least 90% Arsenic, and 6-log bacteria, 4-log virus and 2-log cysts from contaminated water, the composition comprising:
(i) 5 to 30 wt% Aluminium salt,
(ii) 1 to 10 wt% Iron salt and,
(iii) 0.2 to 5 wt% KMnO₄, wherein the ratio of the Al-ions to the Fe-ions to the KMnO₄ is in the range of 1:0.2:0.2 to 1:2:2.
The Aluminium salt is selected from Aluminium sulphate, Aluminium chloride, Polyaluminium chloride, Polyaluminium sulphate or Aluminium chlorohydrate and the Iron salt is selected from Ferrous sulphate, Ferric sulphate, Ferrous chloride or Ferric chloride.

## Description

### FIELD OF INVENTION

The invention relates to a water purification composition. The invention particularly relates to a water purification composition that is especially useful for removal of trace quantities of harmful heavy-metal contaminants like Arsenic, in addition to removal of micro-organisms like viruses, bacteria and cysts to make the water suitable for human consumption.

The invention has been developed primarily for use in drinking water application and will be described hereinafter with reference to this application. However, it will be appreciated that the invention is not limited to this particular field of use.

### BACKGROUND AND RELATED ART

Any discussion of the prior art throughout the specification should in no way be considered as an admission that such prior art is widely known or forms part of the common general knowledge in the field.

Water may contain different contaminants including, particulate matter, chemicals, heavy metals, and micro- organisms such as bacteria, viruses, and cysts (protozoa). In a variety of circumstances, these contaminants must be reduced in concentration/numbers or completely removed before the water can be consumed.

Arsenic, Mercury, Lead, Manganese, Copper and Iron are the most toxic heavy metals, which are commonly found in ground water. These heavy metals find their way into drinking water and pollute the same. This problem is very acute in certain countries/parts of certain countries, such as Bangladesh and the state of West Bengal in India. Amongst these heavy metals, Arsenic is the most poisonous

Arsenic is the twentieth most abundant element in the earth's crust. The most common oxidation states of Arsenic are +3 and +5. Among all the Arsenic compounds present in the environment, of particular interest is Arsenite which is Arsenic in the +3 form, as it is 25-50 times more toxic than Arsenate, which is Arsenic in +5 form, and 70 times more toxic than the methylated species, dimethylarsinate (DMA) and monomethylarsonate (MMA). These facts indicate why it would be of priority interest to develop technologies for the removal of As(+3), from drinking water.

Inorganic Arsenic is identified as a Group-I carcinogen for humans. According to sources, more than 100 million people are affected worldwide due to drinking water contaminated with Arsenic. Drinking water in many of such affected areas has Arsenic content as high as 300 parts per billion (ppb). The WHO (World Health Organisation) and the U.S. Environmental Protection Agency (US-EPA) recommended maximum limit of Arsenic in drinking water is 10 ppb. Available Arsenic removal technologies include membrane separation, ion-exchange, adsorption and coagulation. Thus, one of the major challenges in this field of water purification is removal of Arsenic(+3) and (+5) to meet WHO guidelines.

In addition to Arsenic and other heavy metals; harmful micro organisms like cysts, bacteria and viruses which are present in impure water are also one of the major health concerns across the world; and especially in areas where there is scarcity of safe drinking water. According to US-EPA standards, water from any unknown origin can be rendered microbiologically safe to drink if the requirements of atleast 99.99% (or equivalently, 4-log) removal of viruses, 99.9999% (or equivalently, 6-log) removal of bacteria, and atleast 99% (or equivalently, atleast 2-log) removal of protozoa (cysts) is attained.

A large number of chemical methods of purifying water have been known and used at municipal and domestic levels. The chemicals include various coagulants and flocculants to precipitate the suspended and dissolved impurities and biocides for killing micro-organisms.

One of the most common methods is through adsorption of Arsenic on selective adsorbent media such as Alumina and Ferric hydroxide of specific grades. There are limitations of Arsenic removal by adsorption route using these media, as such media have limited adsorption capacity, the adsorption depends on the input water quality, and the media is prone to fouling/choking due to poor water quality which reduces the flow of water passing there through. In addition, it is generally observed that the adsorption capacity of trivalent Arsenic ions (As(+3)) is lower than the corresponding pentavalent ions (As(+5)). A further drawback of the resins is that the breakthrough of Arsenic in water cannot be predicted, and that there are hassles in regeneration /replacement of the media.

Another known method for removal of Arsenic is through coagulation. There are many primary coagulants like soluble Aluminum salts and Ferric salts; coagulant aids like clays; flocculants like anionic cationic polymers; and oxidants like chlorine compounds, which are recommended for removal of Arsenic from water through coagulation and sedimentation by adding either individual or mixed solid ingredients in water.

WO03/011769 (Procter & Gamble) is based on the finding that water purification compositions based on certain combinations of inorganic coagulants and water-soluble or water-dispersible polymers remove greater amounts of water impurities, such as heavy metals, from water compared to prior art water purification compositions. The composition includes a primary coagulant selected from the group consisting of water-soluble, multivalent inorganic salts and mixtures thereof; a microbiocidal chlorine-based disinfectant in a level sufficient to cause Manganese associated post-flocculation discoloration of the drinking water; an oxidant system providing catalytic or autocatalytic oxidation of soluble Mn(+2) to MnO₂; and optionally a bridging flocculant selected from the group consisting of water-soluble and water dispersible anionic and nonionic polymers having a weight average molecular weight of at least about 2000000 Daltons; a coagulant aid selected from the group consisting of water-soluble and water dispersible cationic polymers having a weight average molecular weight of less than 1500000 Daltons.

WO02/00557 (Procter and Gamble) is based on the finding that certain combinations of inorganic coagulants and water-soluble or water-dispersible polymers remove greater amounts of impurities present in water, such as heavy metals and micro-organisms such as bacteria, viruses and cysts compared to water purification compositions known in the art. It discloses a water purification composition which includes a primary coagulant selected from the group consisting of water-soluble, multivalent inorganic salts and mixtures thereof; a bridging flocculent selected from the group consisting of water-soluble and water dispersible anionic and non-ionic polymers having a weight average molecular weight of at least about 2000000 Daltons, a coagulant aid selected from the group consisting of water-soluble and water dispersible cationic polymers having a weight average molecular weight of less than about 1500000 Daltons.

WO9734836 (Kemira Chemicals, 1997), discloses a method for improving the applicability of a water treatment chemical as a coagulant in a water treatment process comprising a flocculation step wherein the coagulant in the form of an aqueous solution is added to the water to be purified, said water treatment chemical containing an iron and/or aluminium compound as the main component and soluble bivalent manganese Mn(II) as an impurity.

There are some limitations associated with the use of such solid compositions in treatment of water; such as, maintaining the right composition of solids in a pack as the quantity of active solids is very little compared to the other ingredients in the solid dosage. The physical and chemical nature of the ingredients may affect the stability of the product in presence of each other, which affects the compatibility. Sometimes it becomes difficult to ensure the dissolution of solids in water so that the composition acts effectively.

### OBJECT OF THE INVENTION

It is an object of the present invention to overcome or ameliorate at least one of the disadvantages of the prior art.

It is an object of the present invention to provide a coagulant composition for purification of water that provides for removal of atleast 90% Arsenic, and 6-log bacteria, 4-log virus and 2-log cysts from contaminated water.

Other objects of the present invention will become apparent to those skilled in the art by reference to the specification.

The present inventors have found that an aqueous composition which includes 5 to 30 wt% Aluminium salt; 1 to 10 wt% Iron salt; and 0.2 to 5 wt% Potassium permanganate, wherein the ratio of Aluminium ions to Iron ions to the Potassium permanganate is in the range of 1:0.2:0.2 to 1:2:2 is able to meet the above objects.

### SUMMARY OF THE INVENTION

According to the first aspect, the present invention provides an aqueous coagulant composition for purification of water comprising:
(i) 5 to 30 wt% Aluminium salt;
(ii) 1 to 10 wt% Iron salt; and,
(iii) 0.2 to 5 wt% Potassium permanganate, wherein the ratio of Aluminium ions, to Iron ions, to the Potassium permanganate is in the range of 1:0.2:0.2 to 1:2:2.

According to the second aspect, the present invention provides a method for purification of water comprising the step of adding the composition of claim 1 to water and filtering said water.

The term "comprising" is meant not to be limiting to any subsequently stated elements but rather to encompass non-specified elements of major or minor functional importance. In other words the listed steps, elements or options need not be exhaustive. Whenever the words "including" or "having" are used, these terms are meant to be equivalent to "comprising" as defined above.

Except in the operating and comparative examples, or where otherwise explicitly indicated, all numbers in this description indicating amounts of material ought to be understood as modified by the word "about".

It should be noted that in specifying any range of concentration or amount, any particular upper concentration can be associated with any particular lower concentration or amount.

For a more complete understanding of the above and other features and advantages of the invention, reference should be made to the following detailed description of preferred embodiments.

### DETAILED DESCRIPTION OF THE INVENTION

The expression wt% used throughout the specification means percentage by weight.

Without being limited by theory it is believed that the Aluminium and Iron salts when added to water, form gelatinous hydroxide compounds at pH greater than or equal to 6. The mechanism of coagulation via the formation of gelatinous hydroxide is optimum when the pH is adjusted between 6 and 8.5. The gelatinous precipitate entrains fine suspended particles and microbes as it settles or coagulates.

It is preferred that the aqueous coagulant composition includes 10 to 15 wt%, more preferably 13 wt% Aluminium salt. The Aluminium salt is selected from one or more of Aluminium sulphate, Aluminium chloride, Polyaluminium chloride, Polyaluminium sulphate or Aluminium chlorohydrate. The most preferred Aluminium salt is Aluminium sulphate.

It is preferred that the aqueous coagulant composition includes 2 to 8 wt%, more preferably 4 wt% Iron salt. The Iron salt is selected from one or more of Ferrous sulphate, Ferric sulphate, Ferrous chloride or Ferric chloride. The most preferred Iron salt is Ferric sulphate.

It is preferred that the aqueous coagulant composition includes 0.5 to 2 wt%, and more preferably 1 wt% Potassium permanganate.

It is preferred that in the aqueous coagulant composition of the invention, the ratio of Aluminium ions to Iron ions in said Iron salt to the Potassium permanganate is in the range of 1:0.3:0.5 to 1:1.5:1.5. A particularly preferred ratio is 1:0.85:1.0.

The aqueous coagulant composition is capable of removing aleast 6-log bacteria, 4-log viruses and 2-log cysts from contaminated water. Log removal is defined as the log₁₀ of the number of input particles minus the log₁₀ of the number of output particles.

The composition is also capable of removing atleast 90 % of Arsenic and atleast 90% of other heavy metals such as Cadmium, Mercury, Lead, and Copper from the water. The composition of the invention is especially suited for purifying water which contains Arsenic. In contaminated areas, average Arsenic concentration in raw water is around 300 parts per billion (ppb).

It is preferred that the composition is substantially free of Chlorine, lodine, hypochlorite or Ozone. These compounds may react with the essential ingredients present in the composition.

In-use, preferably 3.5 ml of the aqueous composition of the invention is added to and mixed with 10 liters water (i.e. 0.35 ml per litre of water), which is to be purified followed by the step of separating the flocculated mass from the treated water. The flocculated mass is allowed to settle down and then separated from the treated water usually by filtration through a compact carbon block filter.

Further details of the invention, its objects and advantages are explained here under in greater details with reference to the following non-limiting examples. It would be apparent to a person skilled in the art that many such examples are possible and the examples given under are for illustrative purpose only. These should not be construed so as to limit the scope of this invention in any manner.

### EXAMPLES

For the experiments on Arsenic removal, a test-water having the composition as described below was prepared.

### Prepapation of test water

The influent NSF test water (NSF stands for National Science Foundation, USA) was prepared as per the NSF protocol Ref. no. NSF/ANSI 53-2002e. Information relating to the protocol and the protocol itself can be accessed at the following website http://www.nsf.gov.

In addition to this, an in-house test-water having the composition as per Table-1 below was also prepared. The composition of this test-water simulated 90 percentile of the drinking water quality of India. Table-1 below gives details of the compositions of the test-waters.

**Table-1**

| Ingredient | Composition of the test-water | | |
|---|---|---|---|
| | NSF test water at 6.5 pH | NSF test water at 8.5 pH | In-house test water, pH-8.0-8.5 |
| Total Dissolved solids | 500 ppm | 500 ppm | 850 ppm |
| Arsenic (+5) added as Sodium arsenate | 300 ppb ± 10% | 300 ppb ± 10% | 300 ppb ± 10% |
| Cadmium as Cadmium chloride | 30 ppb ± 10% | 30 ppb ± 10% | 30 ppb ± 10% |
| Copper as Copper sulphate | 3 ppm ± 10% | 3 ppm+/- 10% | 1.5 ppm ± 0.5 ppm |
| Mercury as Mercury nitrate | 6 ppb ± 10% | 6 ppb ± 10% | 4 ppb ± 10% |
| Lead as Lead nitrate | 150 ppb ± 10% | 150 ppb ± 10% | 150 ± 10% |

### EXAMPLE-1: Removal of heavy metals from the test waters by a composition according to the invention

An aqueous coagulant composition according to the invention was prepared for testing the efficacy thereof in the removal of Arsenic from the above test-waters. The formulation of the composition is given in Table-2 below. The %weight of various ingredients of the coagulant composition that is Aluminium sulphate, Ferric Sulphate and Potassium Permanganate are based on that the anhydrous materials were used to preparing the composition for testing.

**Table-2**

| Ingredient | Wt% (anhydrous basis) |
|---|---|
| Aluminium sulphate | 6.37 |
| Ferric sulphate | 3.04 |
| Potassium permanganate | 0.85 |
| Deionised water | To 100% |

The ratio of Aluminium ions to Ferric ions to Potassium permanganate was 1:0.85:0.85.

The above aqueous coagulant composition (3.5 ml) was added to 10 litres of each of the above-mentioned test-waters as per Table-1. The final concentration of Aluminium (Al⁺³) ions in each of the test-waters was 3.5 ppm, that of Ferric ions (Fe⁺³) was 3.0 ppm and the concentration of Potassium permanganate was 2.8 ppm. After allowing the flocs formed to settle for about an hour, the water was filtered through ordinary filter cloth, and water samples were analysed for the levels of contaminants by methods well known in the art. The standard US-EPA (Environmental Protection Agency of the United States) method Ref no 200.9 followed for the estimation of total Arsenic (+3 and +5) in water using Atomic Absorption Spectroscopy (AAS Graphite furnace) was used. The same US-EPA method Ref no 200.9 was used to analyse the other heavy metals. The results are presented in Table-3 below in terms of the input and output concentrations (in terms of ppb (parts per billion), and the % removal of each of the heavy metal ions for each type of test-water.

**Table-3**

| | NSF test-water pH 6.5 | | |
|---|---|---|---|
| Metal contaminant | Input/ppb | Output/ppb | % removal |
| Arsenic | 275 | 5.4 | 98 |
| Cadmium | 26 | BDL** | >99 |
| Mercury | 5.8 | BDL** | >99 |
| Copper | 2700 | <10 | >99 |
| Iron * | 3000 | BDL** | >99 |
| Lead | 171 | <1 | >99 |

| | NSF test-water pH 8.5 | | |
|---|---|---|---|
| Metal contaminant | Input/ppb | Output/ppb | % removal |
| Arsenic | 275 | 8.2 | 97 |
| Cadmium | 26 | BDL** | >99 |
| Mercury | 4.3 | BDL** | >99 |
| Copper | 2700 | <10 | >99 |
| Iron * | 3000 | BDL** | >99 |
| Lead | 121 | <1 | >99 |

| | In-house test water | | |
|---|---|---|---|
| Metal contaminant | Input/ppb | Output/ppb | % removal |
| Arsenic | 316 | 9 | 99.7 |
| Cadmium | 32 | 0.59 | 98.2 |
| Mercury | 3.8 | <1 | >99 |
| Copper | 1380 | <10 | >99 |
| Iron * | 3700 | BDL** | >99 |
| Lead | 156 | <1 | >99 |

| | | | |
|---|---|---|---|
| Note:* also present in the composition ** Below Detection Limit | | | |

The data in the above table indicates significantly higher than 90 % removal of Arsenic, as well atleast 98% removal of Cadmium, Mercury, Lead and Copper.

### EXAMPLE-2: Removal of Manganese by the aqueous coagulant composition according to the invention

For this experiment, the composition of the test-waters used was as per Table-4 below. The test waters were prepared by dissolving the required amount of the Manganese salt in water.

**Table-4**

| Ingredient | Test-water | | |
|---|---|---|---|
| | In-house test water-1 | In-house test water-2 | In-house test water-3 |
| Manganese/ppb added through Manganese chloride | 1000 | 2500 | 5000 |

In this experiment 3.5 ml of the composition of Table-2 was added to 10 litres of each of the above test-waters. The test-water was then filtered through a filter cloth and the filtrate was then tested for the amount of Manganese in it. Depending on the difference between the input Manganese concentration and the output Manganese concentration, the % reduction in Manganese content was calculated. For the sake of comparison, three comparative compositions (one having only Aluminium salt; the other having only the Iron salt, and the third one having only Aluminium and Iron salts were also tested in a similar manner. In all cases, the concentration of Al⁺³, Fe⁺³ and Potassium permanganate in the test-waters after adding the compositions was 3.5 ppm, 3 ppm, and 2.8 ppm respectively. Results are given in Table-5 below.

**Table-5**

| % Aluminium sulphate | % Ferric sulphate | % KMnO4 | Output Manganese level/ppb | % Manganese reduction | Test-water used |
|---|---|---|---|---|---|
| 6.37 | - | - | 46 | 95 | Test-water 1 |
| 6.37 | - | - | 115 | 96 | Test-water 2 |
| 6.37 | - | - | 270 | 95 | Test-water 3 |
| - | 3.04 | - | 31 | 97 | Test-water 1 |
| - | 3.04 | - | 135 | 95 | Test-water 2 |
| - | 3.04 | - | 71 | 99 | Test-water 3 |
| 6.37 | 3.04 | - | 141 | 86 | Test-water 1 |
| 6.37 | 3.04 | - | 73 | 97 | Test-water 2 |
| 6.37 | 3.04 | - | 95 | 98 | Test-water 3 |
| 6.37 | 3.04 | 0.85 | 17 | 98.3 | Test-water 1 |
| 6.37 | 3.04 | 0.85 | <10 | 100 | Test-water 2 |
| 6.37 | 3.04 | 0.85 | 53 | 99 | Test-water 3 |

The data in the above table indicates that only the composition according to the invention provides greater than 98% removal of Manganese in case of all three test waters, which had increasing levels of Manganese content. On the other hand, comparative compositions which did not contain the one or more of the essential ingredients did not provide for more than 98% removal of Manganese from all the three test waters.

### EXAMPLE-3: Removal of Pentavalent Arsenic (As(+5)) by the aqueous coagulant composition according to the invention

The efficacy of various compositions within the invention were tested for the removal of pentavalent Arsenic i.e. As(+5) from a model test water which contained 850 ppm TDS, 400 ± 150 ppb Arsenic (in the form of Sodium arsenate) and the pH of which was in the range of 8.0-8.5. To 10 litres of this test water, 3.5 ml of the aqueous coagulant composition of Table-2 was added. The resultant flocs were allowed to settle and were later separated by passing the water through a compact carbon block filter. The content of Arsenic(+5) in filtered water was determined by the method for estimation of Arsenic(+5) content as described in Example-1 above in terms of ppb. Details of the compositions are given in Table-6 below.

**Table-6**

| wt% Aluminium sulphate | wt% Ferric sulphate | wt% KMnO4 | As(+5) in input water level/ppb | As(+5) in output water/ppb | % As(+5) removal |
|---|---|---|---|---|---|
| 6.37 | 3.04 | 0.85 | 532 | 25 | 95 |
| 6.37 | 1.14 | 0.85 | 302 | 21 | 92 |
| 6.37 | 1.9 | 0.85 | 302 | 16 | 94 |
| 6.37 | 4.18 | 0.85 | 532 | 25 | 95 |
| 6.37 | 4.94 | 0.85 | 532 | 24 | 95 |
| 4.65 | 3.04 | 0.85 | 302 | 19 | 93 |
| 10.05 | 3.04 | 0.85 | 302 | 8 | 97 |
| 12.74 | 6.08 | 1.7 | 328 | 6.3 | 98 |

The data in the above table indicates that compositions within the scope of the invention provide greater than 90% removal of Arsenic(+5).

### EXAMPLE-4: Removal of Trivalent Arsenic (As(+3)) by the aqueous coagulant composition according to the invention

The test-water used for this experiment contained 346 ppb Arsenic As(+3) added through Sodium arsenite. 3.5 ml of the composition of Table-2 was added to 10 litres of the above test-water. The water was then filtered through a Carbon block filter. The filtrate was analysed for Arsenic(+3) content by a method as mentioned earlier by EPA method ref no 200.9. The results of this experiment are given in Table-7 below.

**Table-7**

| % Aluminium sulphate | % Ferric sulphate | % KMnO4 | As(+3) in input water level/ppb | As(+3)level in output water | % As (+3) removal |
|---|---|---|---|---|---|
| 12.74 | 6.08 | - | 346 | 14.7 | 95.8 |
| 12.74 | 6.08 | 1.7 | 346 | 4.8 | 98.6 |

The results in the above table indicate that the composition according to the invention provides >98% removal of As(+3), whereas the score in absence of Potassium permanganate was 95.8%.

### EXAMPLE 5: Effect of various ratios of Al:Fe:KMnO4 in the aqueous coagulant composition according to the invention on Arsenic removal.

The efficacy of various compositions at various ratios of Al:Fe: KMnO₄ in the range 1:0.2:0.2 to1:2:2 as per the invention and and also with ratios outside the invention as indicated in Table 8 were tested for the removal of Arsenic using In-house test water described in Table-1 and the pH of which was in the range of 8.0-8.5. To 10 litres of this test water, 3.5 ml of the aqueous coagulant composition was added and the % removal of Arsenic was determined. The data are presented in Table 8.

**Table 8**

| Al | Fe | KMnO₄ | % Arsenic removal |
|---|---|---|---|
| 1.0 | 0.1 | 0.1 | 57.2 |
| 1.0 | 0.2 | 0.2 | 90.2 |
| 1.0 | 0.55 | 0.55 | 97 |
| 1.0 | 0.66 | 0.66 | 95 |
| 1.0 | 0.85 | 0.85 | 98 |
| 1.0 | 2.0 | 2.0 | 97 |
| 1.0 | 2.4 | 2.4 | 81 |

Significant Arsenic removal is achieved and is more than 90% Arsenic removal when the ratio of Al:Fe: KMnO₄ in the range 1:0.2:0.2 to1:2:2 as per the invention as compared to when the ratio was outside this range for e.g. Al:Fe: KMnO₄ is 1:0.1:0.1 or 1:2.4:2.4. This clearly shows that the ratio is critical in achieving significant Arsenic removal.

### EXAMPLE-6: Efficacy of the composition according to the invention in removal of bacteria, virus and cysts

3.5 ml of the aqueous coagulant composition of Table-2 was mixed with 10 litres of standard test-water which was spiked with MS2 Virus also known as Bacteriophage ATCC 15597 B1 and Klebsiella terrigena which is a species of bacteria. This test water contained 850 ppm TDS and its pH was in the range of 8.0 to 8.5. After adding the composition of Table-2 to the test water the test-water was stirred vigorously and allowed to coagulate and settle for 45 minutes. After coagulation and settling, the supernatant solution was passed through a sterile glass column containing sterile GAC (Granular Activated Carbon) bed for removal of Potassium permanganate, and the filtrate was analysed for the levels of the micro-organisms, to check for any reduction in their numbers. From the actual numbers, the log₁₀ reduction was determined. In the case of Cysts, another test-water containing Cryptosporidium parvum Oocysts (irradiated) were dosed into 10 litres of water to get a test-water containing a final concentration of 50,000 Oocysts/L. 3.5 ml of the aqueous coagulant composition of Table-2 was added to the test-water. After coagulation and settling, the supernatant solution was passed through a sterile glass column containing sterile GAC (Granular Activated Carbon) bed for removal of Potassium permanganate as done above for bacteria and virus removal. Results of the experiment are given in Table-8 below.

**Table-9**

| Micro-organism | Input amount | Output pfu/ml | Input log | Output log | Log reduction |
|---|---|---|---|---|---|
| MS2 (virus) | 1.5 x 10⁵ pfu/ml | ∼0 | 5.08 | 0.45 | 4.63 |
| Klebsiella terrigena | 7X10⁵ cfu/100 ml | 0 | 6.0 | 0 | 6.0 |
| Cryptosporidium Oocysts | 46000 oocysts/L | 240 oocysts/L | 4.66 | 2.38 | 2.28 |

The results in the above table indicate that the aqueous coagulant composition meets the requirement of 6-log bacteria removal, atleast 4-log virus removal and atleast 2-log cyst removal from water.

The illustrated examples provide a coagulant composition for purification of water that provides for removal of atleast 90% Arsenic and other heavy metals, as well as 6-log bacteria, 4-log virus and 2-log cysts from contaminated water.

It should be understood that the specific forms of the invention herein illustrated and described are intended to be representative only as certain changes may be made therein without departing from the clear teachings of the disclosure.

Although the invention has been described with reference to specific embodiments, it will be appreciated by those skilled in the art that the invention may be embodied in many other forms.

## Claims

1. An aqueous coagulant composition for purification of water comprising:
(i) 5 to 30 wt% Aluminium salt;
(ii) 1 to 10 wt% Iron salt; and,
(iii) 0.2 to 5 wt% Potassium permanganate, wherein the ratio of the Aluminium ions to the Iron ions to the Potassium permanganate is in the range of 1:0.2:0.2 to 1:2:2.

2. An aqueous coagulant composition as claimed in claim 1 wherein said Aluminium salt is selected from Aluminium sulphate, Aluminium chloride, Polyaluminium chloride, Polyaluminium sulphate or Aluminium chlorohydrate.

3. An aqueous coagulant composition as claimed in claim 1 or claim 2 wherein said Iron salt is selected from Ferrous sulphate, Ferric sulphate, Ferrous chloride or Ferric chloride.

4. An aqueous coagulant composition as claimed in any one of the preceding claims wherein said ratio is in the range of 1:0.3:0.5 to 1:1.5:1.5.

5. An aqueous coagulant composition as claimed in claim 4 wherein said ratio is 1:0.85:1.0.

6. An aqueous coagulant composition as claimed in any one of the preceding claims wherein said composition is substantially free of chlorine, iodine, hypochlorite or ozone.

7. A method for purification of water comprising the step of adding the composition of claim 1 to water and filtering said water.

8. An aqueous coagulant composition substantially as herein described with reference to the accompanying examples.
